# EUROPÄISCHE PATENTSCHRIFT

(11) **EP 0 702 835 B1**
(45) Veröffentlichungstag und Bekanntmachung des Hinweises auf die Patenterteilung: **20.08.1997**
(21) Anmeldenummer: 94916148.3
(22) Anmeldetag: 01.06.1994
(51) Int. Cl.: G21C 9/016

(54) **EINRICHTUNG UND VERFAHREN ZUM AUFFANGEN UND KÜHLEN VON KERNSCHMELZE**
DEVICE AND METHOD FOR COLLECTING AND COOLING REACTOR-MELTDOWN PRODUCTS
DISPOSITIF ET PROCEDE POUR LA RECUPERATION ET LE REFROIDISSEMENT DE PRODUITS DE FUSION DU COEUR D'UN REACTEUR

(30) Priorität: 08.06.1993 DE 4319094
(43) Veröffentlichungstag der Anmeldung: 27.03.1996
(73) Patentinhaber: SIEMENS AKTIENGESELLSCHAFT, 80333 München (DE)
(72) Erfinder: BITTERMANN, Dietmar, D-90765 Fürth (DE); GÖBEL, Andreas, D-91077 Neunkirchen a. Brand (DE); HAU, Gerhard, D-72461 Albstadt (DE); SEIDELBERGER, Hartmut, D-91056 Erlangen (DE); WEISSHÄUPL, Horst, D-91074 Herzogenaurach (DE); WISTUBA, Lothar, D-91074 Herzogenaurach (DE)
(86) Internationale Anmeldenummer: DE9400617
(87) Internationale Veröffentlichungsnummer: WO9429876

(56) Entgegenhaltungen:
- EP-A- 0 392 604
- EP-A- 0 419 159
- EP-A- 0 563 739
- DE-A- 2 710 290
- DE-B- 2 925 680
- GB-A- 2 030 347
- PROCEEDINGS OF THE FIFTH INTERNATIONAL CONFERENCE ON EMERGING NUCLEAR SYSTEMS, ICENES 89, 6. Juli 1989, KARLSRUHE Seiten 19 - 24 HENNIES, KESSLER 'Improved containment concept for future pressurized water reactors' cited in the application
- DATABASE WPI Week 8128, Derwent Publications Ltd., London, GB; AN 81-77126D & SE,A,8 004 988 (ASEA-ATOM AB) 22. Juni 1981

## Beschreibung

Die Erfindung bezieht sich auf eine Einrichtung und ein Verfahren zum Auffangen und Kühlen von Kernschmelze aus einem Reaktordruckbehälter. Sie ist insbesondere beim EPR-Druckwasserreaktor einsetzbar.

Die bisher üblichen Sicherheitsüberlegungen gingen bei Kernreaktoren davon aus, daß infolge von Materialwahl und Dimensionierung ein Versagen des Reaktordruckbehälters nicht zu befürchten ist. Im Zuge intensiverer sicherheitstechnischer Überlegungen zur Kernenergienutzung wird aber neuerdings auch der Fall in die Überlegungen einbezogen, daß ein Reaktordruckbehälter einmal "versagt", und sei dieser Fall auch noch so unwahrscheinlich. Insbesondere ein neuer Reaktortyp, der Europäische Druckwasserreaktor EPR (European Pressurized Water Reactor), basiert auf solchen Überlegungen. Im Gegensatz zur bisherigen Sicherheitsphilosophie wird bei diesem Reaktortyp ein Kernschmelzunfall - ein sogenannter GAU (größter anzunehmender Unfall) - nicht generell ausgeschlossen. Auch sind Überlegungen angestellt worden, ob nicht während eines Kernschmelzunfalls Dampfexplosionen auftreten können, und ob der in einer solch kritischen Phase schlagartig entstehende Wasserdampf den Druckbehälter nicht zum Platzen bringen kann. Es besteht keine Frage, daß solche Unfälle - so theoretisch sie auch sein mögen - beherrschbar sein müssen.

Bei einem hypothetischen schweren Störfall in einem Kernkraftwerk mit wassergekühltem Reaktor wird also angenommen, daß der Reaktorkern schmilzt. Danach tritt Kernschmelze auf der unteren Seite des Reaktordruckbehälters in die Schildgrube des Reaktorsicherheitsbehälters aus. Um einen solchen Störfall beherrschen zu können, müssen geeignete bauliche Maßnahmen getroffen werden, die verhindern, daß die unter Umständen mit Überdruck aus dem Reaktordruckbehälter austretende und sich im Bodenbereich der Kernreaktoranlage ansammelnde Schmelze zu einem Versagen des Reaktorsicherheitsbehälters (Containment) führt.

Aus der deutschen Patentschrift 28 40 086 ist beispielsweise eine Kernreaktoranlage mit einer Auffangeinrichtung für einen abschmelzenden Reaktorkern bekannt, bei der unterhalb der den Reaktordruckbehälter umgebenden Schildgrube ein vertikaler Abflußkanal vorgesehen ist. Dieser Abflußkanal durchsetzt den Reaktorsicherheitsbehälter und führt in eine unterhalb des Reaktorsicherheitsbehälters angeordnete Schmelzgrube. Dort wird die aus dem Reaktordruckbehälter austretende Kernschmelze auf ein Absorberbett verteilt, das durch eine mit wasserfreien Stoffen gefüllte stählerne Wanne gebildet ist. Nach Aufschmelzen dieser stählernen Wanne gelangt die Schmelze auf den Boden der Schmelzgrube. Der Boden und die Seitenwände dieser Schmelzgrube sind wassergekühlt, so daß die Schmelze allmählich erstarrt.

Bei der aus der deutschen Patentschrift 29 25 680 bekannten Kernreaktoranlage ist zur Aufnahme der Schmelze ebenfalls eine unterhalb dem Niveau des Reaktorfundamentes angeordnete Auffangwanne vorgesehen. Die Auffangwanne befindet sich dabei nicht direkt unterhalb des Reaktorkerns, sondern ist neben dem Reaktorkern angeordnet und über eine horizontal über der Auffangwanne auslaufenden Rutsche mit dem Boden des Reaktorgebäudes verbunden.

Bei diesen bekannten Konstruktionen zur Aufnahme der Kernschmelze kann unter ungünstigen Umständen nicht verhindert werden, daß bereits vor oder während des Ausfließens der Schmelze eine größere Menge Wasser in den Auffangraum eingedrungen ist bzw. eindringt. Dies kann zur Folge haben, daß die Schmelze mit hoher Geschwindigkeit direkt auf das Wasser auftrifft, dort fragmentiert wird und eine sehr heftige, plötzliche Dampfbildung verursacht. Die Erfindung beruht auf der Erkenntnis, daß die Menge Wasser, auf die die Kernschmelze trifft, möglichst gering sein soll.

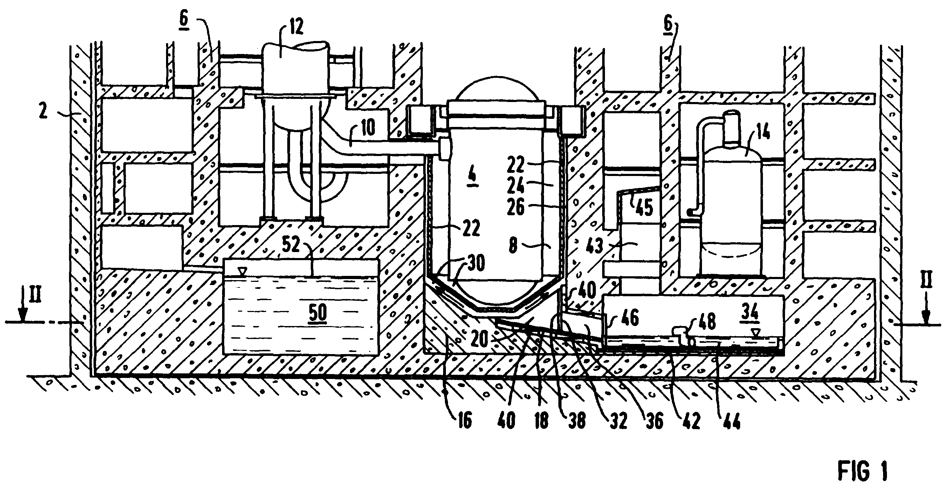

Aus "Emerging Nuclear Energy Systems 1989, Icenes 89, Karlsruhe 3. bis 6. Juli, Proceedings of the Fifth International Conference on Emerging Nuclear Systems, Seiten 19 bis 24", ist aus Figur 1 eine Kernschmelzenauffangvorrichtung bekannt, bei der innerhalb des Reaktorsicherheitsbehälters direkt unterhalb des Reaktordruckbehälters eine gekühlte Auffangwanne angeordnet ist, in der sich die Schmelze großflächig ausbreiten und in direktem Kontakt mit Wasser abkühlen kann. Der durch die Nachzerfallswärme der Schmelze erzeugte Dampf kondensiert im oberen Teil der Stahlhülle eines Reaktorsicherheitsbehälters und fließt von dort aus zurück zur Kernschmelzenauffangvorrichtung. Auch bei dieser bekannten Kernreaktoranlage kann nicht ausgeschlossen werden, daß sich bereits vor dem Versagen des Reaktordruckbehälters Sumpfwasser in der Auffangwanne und in der Schildgrube ansammelt, so daß im Augenblick des Versagens des Reaktordruckbehälters das Risiko besteht, daß die austretende Schmelze direkt und mit hoher Geschwindigkeit auf die Wasseroberfläche auftrifft. Dies kann ebenfalls zu einer starken Fragmentierung der Schmelze und zu einer sehr heftigen Dampfbildung führen, die den Reaktorsicherheitsbehälter gefährdet.

Aus der EP-A1-0 392 604 ist eine Auffang- und Kühleinrichtung bekannt, bei der sich der Wasservorrat unterhalb des Reaktordruckbehälters befindet. Im Kernschmelzfall würden die Kernschmelze und Teile des Reaktordruckbehälters sowie seiner Einbauten direkt in das Wasserbad fallen. Dies ist vom Standpunkt einer effektiven Kühlung und einer Vermeidung von Dampfexplosionen nicht zweckmäßig. Angestrebt wird vielmehr ein Abkühlvorgang, bei dem die ausfließende Kernschmelze nicht auf eine größere Menge Wasser trifft.

Der Erfindung liegt die Aufgabe zugrunde, eine Einrichtung der eingangs genannten Art, speziell eine Kernrückhalteeinrichtung (Core Retention Device) nach dem Ausbreitungsprinzip anzugeben, bei der im Falle eines Versagens des Reaktordruckbehälters die Heftigkeit der Dampfbildung infolge des Kontakts zwischen der Kernschmelze und etwa vorhandenem Wasser erheblich reduziert oder sogar ganz vermieden ist. Weiterhin soll ein Verfahren hierfür angegeben werden.

Die genannte Aufgabe wird gemäß der Erfindung mit einer Einrichtung zum Auffangen und Kühlen von Kernschmelze aus einem Reaktordruckbehälter gelost, die ausgerüstet ist
a) mit einer unterhalb des Reaktordruckbehälters angeordneten Vorkammer,
b) mit einer Ausbreitungskammer für die Kernschmelze,
c) mit einem Kanal zwischen der Vorkammer und der Ausbreitungskammer, der mit einer von der Kernschmelze zerstörbaren Trennwand versehen ist, und
d) mit einem Kühlmittelreservoir, das über ein von der Kernschmelze zerstörbares Verschlußorgan an die Ausbreitungskammer angeschlossen ist.

Bevorzugt ist die Vorkammer boden- und/oder wandseitig mit einem feuerfesten Material ausgekleidet. Dieses Material oder ein anderes, in die Vorkammer eingebrachtes Material wirkt vorzugsweise, wenn es sich mit der Kernschmelze legiert, schmelzpunkterniedrigend, so daß es also die Kernschmelze dünnflüssiger macht.

Die zerstörbare Trennwand ist so dimensioniert und vom Material her so ausgewählt, daß sie nach einer vorgegebenen Zeitspanne, beispielsweise nach einer Zeitspanne von 20 bis 30 Minuten, unter Wirkung der Kernschmelze zerstört, also beispielsweise aufgeschmolzen wird.

Die zerstörbare Trennwand ist vorzugsweise am Kanaleingang, also zwischen der Vorkammer und dem Kanal, eingefügt. Die Vorkammer steht somit über diesen Kanal, der bevorzugt abfällt oder geneigt verläuft, mit der Ausbreitungskammer in Verbindung. Die Trennwand ist, wie erwähnt, so ausgebildet, daß sie eine vorgegebene Zeitspanne von zum Beispiel 20 bis 30 Minuten der in der Vorkammer enthaltenen Kernschmelze zu widerstehen vermag. Anschließend läuft die Kernschmelze infolge der Kanalneigung von alleine in die Ausbreitungskammer und verteilt sich dort.

Als Kühlmittelreservoir kommt in erster Linie ein Wasserreservoir in Betracht.

Das genannte Verschlußorgan ist bevorzugt an der Mündung einer Zuleitung vom Kühlmittelreservoir zur Ausbreitungskammer angeordnet. Die in die noch trockene Ausbreitungskammer eindringende und sich in dieser ausbreitende Kernschmelze erreicht dieses Verschlußorgan und zerstört es, so daß das Kühlmittel aus dem Kühlmittelreservoir in die Ausbreitungskammer strömt. Das Kühlmittel bedeckt dabei die Oberfläche der Kernschmelze und kühlt diese ab.

Die Trennwand und das Verschlußorgan sind unter der Wirkung der Kernschmelze zerstörbar. Dieses kann durch Bersten oder durch Aufschmelzen geschehen. Dabei kann die Trennwand und/oder das Verschlußorgan eine Glas- oder Kunststoffplatte oder einen Stopfen aus Glas oder Kunststoff umfassen.

Von Bedeutung ist, daß die Vorkammer einerseits ein relativ kleines Volumen besitzt, damit sich darin wenig Wasser ansammeln kann, und daß die Trennwand andererseits lange genug ihrer thermischen Zerstörung widersteht. Zur Erzielung des erstgenannten Zwecks kann ein dünnwandiger Hohl- oder Füllkörper in der Vorkammer vorgesehen sein.

Das Verfahren zum Auffangen und Kühlen von Kernschmelze aus einem Reaktordruckbehälter ist erfindungsgemäß gekennzeichnet durch
a) ein Auffangen der Kernschmelze in einer unterhalb des Reaktordruckbehälters gelegenen Vorkammer und ein Verweilen darin für eine vorgegebene Zeitspanne,
b) ein durch die Kernschmelze bewirktes Zerstören einer Trennwand, die zwischen der Vorkammer und einer Ausbreitungskammer gelegen ist,
c) ein Eindringen der Kernschmelze aus der Vorkammer in die Ausbreitungskammer und eine Verbreitung darin, sowie
d) ein durch die Kernschmelze, die sich in der Ausbreitungskammer befindet, bewirktes Zerstören eines Verschlußorgans, über das ein Kühlmittelreservoir an die Ausbreitungskammer angeschlossen ist, so daß das Kühlmittel in die Ausbreitungskammer strömt und dort die Kernschmelze kühlt.

Weitere vorteilhafte Ausgestaltungen sind in den Unteransprüchen gekennzeichnet.

Als Vorteil wird es angesehen, daß bei der Einrichtung nach der Erfindung auch im unwahrscheinlichen Fall des Austretens von Kernschmelze ein unzulässiger Druck im Containment vermieden wird.

Ausführungsbeispiele der Erfindung werden im folgenden anhand der Zeichnung näher erläutert. Es zeigen:
Figur 1 eine Rückhalte- und Kühleinrichtung für Kernschmelze, die aus einem Reaktordruckbehälter entweichen könnte, im Vertikalschnitt entlang der Linie I-A-I von Figur 2;
Figur 2 einen Querschnitt dieser Rückhalte- und Kühleinrichtung entlang der Linie II-II von Figur 1 und
Figur 3 eine Öffnungsvorrichtung für den Wasserzulauf zu einer Ausbreitungskammer.

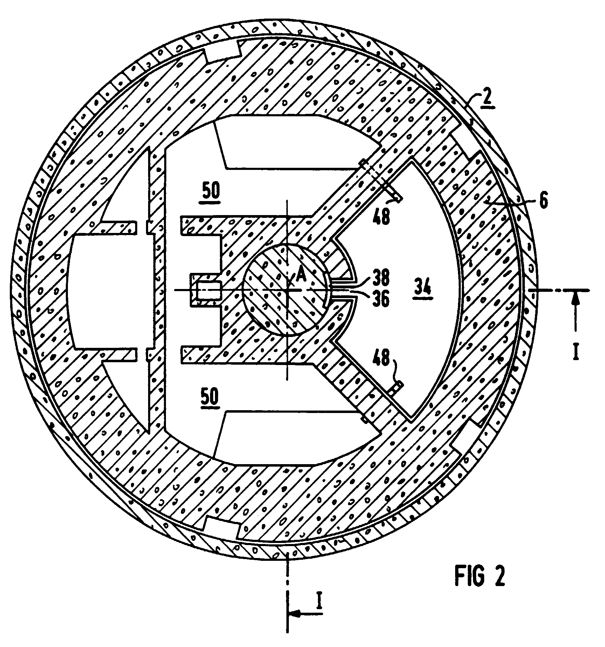

Nach Figur 1 und 2 ist in einem Reaktorsicherheitsbehälter 2 einer Kernreaktoranlage ein Reaktordruckbehälter 4 angeordnet. Der Reaktordruckbehälter 4 wird von einer ihn umgebenden Betonstruktur 6 in einer Schildgrube 8 getragen. Der Reaktordruckbehälter 4 enthält einen nicht näher dargestellten wassergekühlten Reaktor oder Reaktorkern. Der Reaktordruckbehälter 4 ist über eine Hauptkühlmittelleitung 10 an einen Dampferzeuger 12 angeschlossen. Ein Druckhalte-Abblasebehälter ist mit 14 bezeichnet. Er ist in einem Raum neben dem Reaktordruckbehälter 4 untergebracht.

Die Schildgrube 8 ist im oberen Teil zylindrisch und im unteren Teil gewölbt, speziell kegelstumpfförmig ausgebildet. Die kegelstumpfförmige Ausbildung wird mit Hilfe eines feuerfesten Betonsockels 16, einer aufgebrachten Rutschebene 18 und eines eingefügten Wasser-Verdrängungskörpers 20 erreicht. Der Sockel 16 kann auch aus einem anderen Material bestehen, zum Beispiel aus einer feuerfesten Keramik oder speziellen Steinen. Der Sockel 16 verhindert, daß sich Kernschmelze nach unten durchfressen kann. Dasselbe gilt für das Material der Rutschebene 18.

Die kegelstumpfförmige Formgebung der Schildgrube 8 entspricht weitgehend derjenigen des Reaktordruckbehälters 4, der im oberen Teil zylindrisch geformt ist und im unteren Teil eine Kugelkalotte besitzt. Das theoretische Unfallszenario geht davon aus, daß diese Kugelkalotte auf- oder abreißen kann, so daß sich die im Reaktordruckbehälter 8 befindliche Kernschmelze in die Schildgrube 8 ergießt.

Innerhalb der Schildgrube 8 ist eine Isolation 22 untergebracht. Sie unterteilt die Schildgrube 8 in einen inneren Spaltraum 24, der zur Außenprüfung des Reaktordruckbehälters 4 mit Hilfe von Manipulatoren dient, und in einen äußeren Spaltraum 26, der zur Belüftung der Reaktorgrube 8 benutzt wird, was durch zwei kleine Pfeile angedeutet ist. Der untere Teil des Schildgrube 8, in dem sich die Kugelkalotte des Reaktordruckbehälters 4 befindet, wird im folgenden als Vorkammer 30 bezeichnet. Diese Vorkammer 30 ist gewölbt, oder, wie dargestellt, kegelstumpfförmig ausgebildet. Mit anderen Worten: Diese Vorkammer 30 ist weitgehend an die Geometrie des unteren Teils des Reaktordruckbehälters 4 angepaßt. Bei einem Abreißen der Kugelkalotte würde letztere in die Vorkammer 30 hineinfallen. Damit in einem solch schweren Störfall die austretende Kernschmelze allenfalls auf ein geringes Wasservolumen trifft, besitzt die Vorkammer 30 unterhalb des Reaktordruckbehälters 4 nur ein kleines Volumen; es ist viel kleiner als das Volumen des Reaktordruckbehälters 4 selbst. Dies wurde bei der Formgebung und Dimensionierung beachtet.

In der Vorkammer 30 unterhalb des Reaktordruckbehälters 4 ist (im rechten Teil von Figur 1) der Wasser-Verdrängungskörper 20 angeordnet. Dieser Verdrängungskörper 20 dient dazu, das "wasser-sammlungs-wirksame" Volumen der Vorkammer 30 kleinzuhalten, damit dort als eventuelle Folge eines Störfalls wenig Wasser vorhanden sein kann. Dieser Verdrängungskörper 20 ist insbesondere als dünnwandiger Hohlkörper ausgebildet. Er kann aus dünnen Metallplatten zusammengesetzt sein. Wichtig ist, daß er bei Auftreten von Kernschmelze in der Vorkammer 30 schnell durchschmilzt und Platz macht für die Ansammlung der Kernschmelze in der Vorkammer 30. Gleichzeitig dient er zur Anpassung des Raums an eine rechts gelegene Auslaß- oder Abflußöffnung 32 für die Kernschmelze.

Noch weiter rechts ist in Figur 1 eine Ausbreitungskammer 34 gelegen. Wichtig ist, daß diese Ausbreitungskammer 34 seitlich und in einigem Abstand vom Reaktordruckbehälter 4 angeordnet sowie im Normalbetrieb trocken gehalten ist. Die Vorkammer 30 ist über die Abflußöffnung 32 und einen Kanal 36, der vorzugsweise geneigt ist oder abfällt, an die Seitenwand der Ausbreitungskammer 34 angeschlossen. Am Eingang des Kanals 36, das heißt vor der Abflußöffnung 32, steht senkrecht eine Schott- oder Trennwand 38. Diese Trennwand 38 ist von der Kernschmelze zerstörbar. Die Trennwand 38 ist also so bemessen, daß sie nach einer vorgegebenen Zeitspanne unter Wirkung der Kernschmelze zerstört wird. Diese Zeitspanne kann beispielsweise 20 bis 30 Minuten betragen.

Die Schott- oder Trennwand 38 kann insbesondere in Form einer Metallplatte ausgebildet sein. Sie soll im Versagens fall , wenn also der Reaktordruckbehälter 4 leck wird, den Restdruck aufnehmen. Dieser Restdruck kann beispielsweise 20 bar betragen. Sie soll nur solange dem Druck und der Temperatur widerstehen, bis der überwiegende Teil des Reaktorkerns sich in Form von Kernschmelze in dem unteren Teil der Schildgrube 8 gesammelt hat.

Der Boden der Vorkammer 30 unterhalb des Verdrängungskörpers 20 und der Boden des Kanals 36, das heißt die Rutschebene 18, sind mit einem besonders temperaturresistenten Material 40 ausgekleidet. Als Oberschicht kann dabei allerdings ein Material vorgesehen sein, das bei Reaktion mit der Kernschmelze zu einer Schmelzpunkterniedrigung führt und das die Kernschmelze dadurch dünnflüssiger macht. Es gibt beispielsweise besondere Sorten von Beton, die bei 1300 bis 1500 °C aufgelöst werden. Das temperaturresistente Material 40 kann, wie gezeigt, auch als Wandmaterial (zumindest im Bereich der Abflußöffnung 32) verwendet werden. Auch der Boden der Ausbreitungskammer 34 kann mit einem besonderen temperaturresistenten Material 42 belegt sein.

Der Kanal 36 hat beispielsweise eine Höhe von 1 m und eine Breite von 1,20 m. Er hat also einen relativ großen Querschnitt, um ein leichtes Ablaufen der Kernschmelze zu ermöglichen. Ein abschüssiger Verlauf des Kanals 36 ist bevorzugt, da damit ein weitgehend restfreies Auslaufen der Kernschmelze vom Vorraum 30 in die Ausbreitungskammer 34 gewährleistet ist. Die Kernschmelze folgt hierbei der Schwerkraft. Die Fläche der Ausbreitungskammer 34 beträgt zum Beispiel 150 m². Aus Figur 2 geht hervor, daß die Ausbreitungskammer 34 segmentartig gestaltet sein kann. Das Niveau der Kernschmelze nach dem Einfließen in die Ausbreitungskammer 34 ist in Figur 1 mit 44 bezeichnet. Ein Zugang 43 vom Containment zur Ausbreitungskammer 34 ist mit einer Haube oder Abdeckung 45 vor dem Eintritt von Wasser geschützt.

Am Ausgang des Kanals 36, also im Bereich zwischen der Vorkammer 30 und der Ausbreitungskammer 34, ist eine Dichtplatte 46 angeordnet. Sie verhindert das Eintreten von Wasser von der Ausbreitungskammer 34, sollte dort wider Erwarten solches eingetreten sein, in die Vorkammer 30. Sie kann aus einem Isolierstoff wie zum Beispiel (auswechselbarem) Gummi oder einer Stahlplatte mit Außenisolation bestehen.

Über mindestens ein von der Kernschmelze thermisch zerstörbares Verschlußorgan 48 sowie über anschließende Verbindungen ist an die Ausbreitungskammer 34 ein innenliegendes Flutbecken oder Kühlmittelreservoir 50 angeschlossen. Hierbei handelt es sich insbesondere um eine Wasserkammer, die seitlich vom Reaktordruckbehälter 4 liegt. Bevorzugt wird der ohnehin in der Reaktoranlage vorhandene Sumpf verwendet, in dem das im Containment vorhandene Wasser zusammenläuft. Das Wasservolumen kann zum Beispiel 1500 m³ betragen. Der Wasserspiegel ist in Figur 1 mit 52 bezeichnet.

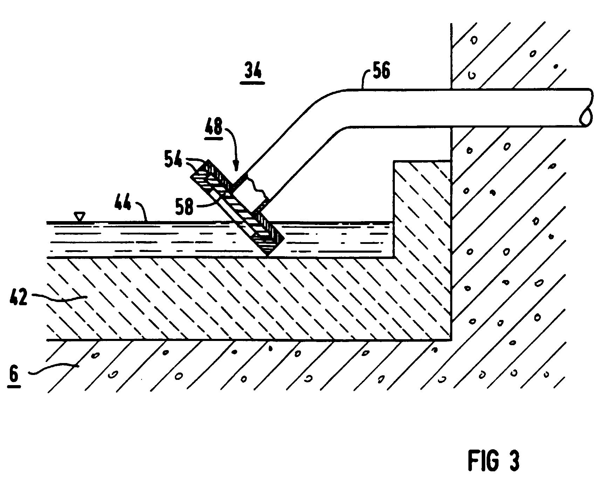

Ein Ausführungsbeispiel für das Verschlußorgan 48 wird später anhand von Figur 3 näher erläutert. Das Verschlußorgan 48 ist beispielsweise als Stopfen oder Scheibe ausgebildet; es kann aus einem Material wie Glas oder Kunststoff bestehen, das unter der thermischen Einwirkung der Kernschmelze, zum Beispiel bei direkter Berührung, schmilzt oder zerbirst. Das Organ 48 ist so konstruiert, daß es dann nicht nur den direkt benetzten Flächenteil, sondern eine größere Fläche freigibt. Diese Fläche kann auch an einem anderen Ort gelegen sein.

Das Verschlußorgan 48 kann einen durch die Schwerkraft bewirkten Zulauf von zum Beispiel 100 kg/min. freigeben. Die Dimensionierung der Verbindung zum Kühlmittelreservoir 50 ist entsprechend gewählt. Läuft das Wasser in die Ausbreitungskammer 34 und damit auf die Kernschmelze, so dauert es relativ lange, bis der Wasserspiegel etwa auf die Rutsche 18 bis zur Mittellinie des Reaktordruckbehälters 4 angestiegen ist. Die Zeit kann zum Beispiel eine Stunde betragen.

Es war bereits dargelegt worden, daß die Ausbreitungskammer 34 seitlich von der Vorkammer 30 und dem Reaktordruckbehälter 4 angeordnet ist. Durch diese wichtige Maßnahme wird erreicht, daß im Falle des Austritts von Kernschmelze die mechanischen Belastungen im wesentlichen von der Vorkammer 30 und die späteren thermischen Belastungen im wesentlichen von der Ausbreitungskammer 34 aufgenommen werden. Mit anderen Worten: Die Ausbreitungskammer 34 braucht bei Eintritt der Kernschmelze keine direkten mechanischen Belastungen aufzunehmen. Infolge ihres Bodenaufbaus, also infolge der Wahl der Art und Dimensionierung des Materials 42, ist die Ausbreitungskammer 34 aber geeignet, langfristig die thermischen Belastungen aufzunehmen.

Prinzipiell sind zwei Arten des Versagens des Reaktordruckbehälters 4 denkbar: Es kann die gesamte Kalotte abreißen, oder es kann in der Kalotte ein Loch auftreten. In beiden Fällen wird Kernschmelze in die Vorkammer 30 austreten, und zwar mehr oder weniger schnell. Da in den Spalten 24, 26 im Bereich der Vorkammer 30 sich infolge der geringen Breite und des geringen Volumens allenfalls wenig Wasser ansammeln kann, ist die energetische Auswirkung beim Auftreffen der Kernschmelze auf diese geringe Wassermenge tolerierbar. Ein weiterer Vorteil ergibt sich dadurch, daß die Kernschmelze in beiden Fällen ausreichend lange in der Vorkammer 30 vor dem Hohlkörper 20 und dann allein vor der Trennwand 38 gehalten wird, so daß ein Sammelvorgang einsetzt. Die Kernschmelze wird so eine vorgegebene Zeit lang in der Vorkammer 30 gehalten. Nach dem Zerstören der Trennwand 38 verbreitet sich die Kernschmelze über den Kanal 36 in der Ausbreitungskammer 34. Sie bewirkt dabei das Zerstören des Verschlußorgans 48, so daß das Kühlmittel Wasser (oder gegebenenfalls ein anderes Kühlmittel) aus dem Reservoir 50 in die Ausbreitungskammer 34 strömt und dort die Kernschmelze kühlt.

In Figur 3 ist ein Ausführungsbeispiel des Verschlußorgans 48 in der Ausbreitungskammer 34 dargestellt. Dieses besteht im wesentlichen aus einer Scheibe 58 aus Glas oder Kunststoff, die mittels einer Flanschverbindung 54 am Ende eines Verbindungsrohres 56, das zum Beispiel aus Stahl besteht, befestigt ist. Das Verschlußorgan 48 ist in der Nähe des Bodens der Ausbreitungskammer 34, das heißt knapp oberhalb der Isolierung oder thermischen Schutzschicht 42, angeordnet.

## Patentansprüche

1. Einrichtung zum Auffangen und Kühlen von Kernschmelze aus einem Reaktordruckbehälter (4)
mit einer unterhalb des Reaktordruckbehälters (4) angeordneten Vorkammer (30),
mit einer Ausbreitungskammer (34) für die Kernschmelze,
mit einem Kanal (36) zwischen der Vorkammer (30) und der Ausbreitungskammer (34) dadurch gekennzeichnet, daß der Kanal (36) mit einer von der Kernschmelze zerstörbaren Trennwand (38) versehen ist, und daß, der Reaktordruckbehälter (4)
mit einem Kühlmittelreservoir (50) versehen ist, das über ein von der Kernschmelze zerstörbares Verschlußorgan (48) an die Ausbreitungskammer (34) angeschlossen ist.

2. Einrichtung nach Anspruch 1, **dadurch gekennzeichnet,** daß die Vorkammer (30) boden- und/oder wandseitig mit feuerfestem Material (40) ausgekleidet ist.

3. Einrichtung nach Anspruch 1 oder 2, **dadurch gekennzeichnet,** daß die Vorkammer (30) mit einem Material ausgekleidet ist, das bei Reaktion mit der Kernschmelze zu einer Schmelzpunkterniedrigung führt und die Kernschmelze dadurch dünnflüssiger macht.

4. Einrichtung nach einem der Ansprüche 1 bis 3, **dadurch gekennzeichnet,** daß die zerstörbare Trennwand (38) so bemessen ist, daß sie nach einer vorgegebenen Zeitspanne unter Wirkung der Kernschmelze zerstört wird, wobei diese Zeitspanne zum Beispiel 20 bis 30 Minuten beträgt.

5. Einrichtung nach einem der Ansprüche 1 bis 4, **dadurch gekennzeichnet,** daß die zerstörbare Trennwand (38) zwischen der Vorkammer (30) und dem Kanal (36) eingefügt ist.

6. Einrichtung nach einem der Ansprüche 1 bis 5, **dadurch gekennzeichnet,** daß der Kanal (36) zwischen der Vorkammer (30) und der Ausbreitungskammer (34) abfällt.

7. Einrichtung nach einem der Ansprüche 1 bis 6, **dadurch gekennzeichnet,** daß das Kühlmittelreservoir (50) ein Wasserreservoir ist.

8. Einrichtung nach einem der Ansprüche 1 bis 7, **dadurch gekennzeichnet,** daß die Ausbreitungskammer (34) im Normalbetrieb trocken gehalten ist.

9. Einrichtung nach einem der Ansprüche 1 bis 8, **dadurch gekennzeichnet,** daß das Verschlußorgan (48) an der Mündung einer Zuleitung (56) vom Kühlmittelreservoir (50) zur Ausbreitungskammer (34) angeordnet ist.

10. Einrichtung nach einem der Ansprüche 1 bis 9, **dadurch gekennzeichnet,** daß die Trennwand (38) und/oder das Verschlußorgan (48) unter der Wirkung der Kernschmelze durch Bersten oder Aufschmelzen zerstörbar ist.

11. Einrichtung nach einem der Ansprüche 1 bis 10, **dadurch gekennzeichnet,** daß die Trennwand (38) und/oder das Verschlußorgan (48) eine Platte oder einen Stopfen aus Glas oder Kunststoff umfaßt.

12. Einrichtung nach einem der Ansprüche 1 bis 11, **dadurch gekennzeichnet,** daß in der Vorkammer (30) ein Wasser-Verdrängungskörper (20) angeordnet ist, der insbesondere als dünnwandiger Hohlkörper ausgebildet ist.

13. Einrichtung nach einem der Ansprüche 1 bis 12, **dadurch gekennzeichnet,** daß die Vorkammer (30) und/oder eine darin befindliche Isolation (22) weitgehend der Formgebung des Reaktordruckbehälters (4) angepaßt ist, so daß die Vorkammer (30) ein gegenüber dem Reaktordruckbehalter (4) vergleichsweise kleines Volumen besitzt.

14. Einrichtung nach einem der Ansprüche 1 bis 13, **dadurch gekennzeichnet,** daß die Ausbreitungskammer (34) seitlich vom Reaktordruckbehälter (4) angeordnet ist.

15. Einrichtung nach einem der Ansprüche 1 bis 14, **dadurch gekennzeichnet,** daß zwischen der Ausbreitungskammer (34) und der Vorkammer (30) eine Dichtplatte (46) angeordnet ist, die das Eintreten von Wasser von der Ausbreitungskammer (34) in die Vorkammer (30) verhindert.

16. Einrichtung nach einem der Ansprüche 1 bis 15, **dadurch gekennzeichnet,** daß das Kühlmittelreservoir (50) seitlich vom Reaktordruckbehälter (4) angeordnet ist.

17. Einrichtung nach einem der Ansprüche 1 bis 16, **dadurch gekennzeichnet,** daß die Ausbreitungskammer (34) eine Fläche von 150 m² oder mehr und/oder daß das Kühlmittelreservoir (50) ein Volumen von 1500 m³ oder mehr aufweist.

18. Verfahren zum Auffangen und Kühlen von Kernschmelze aus einem Reaktordruckbehälter, **gekennzeichnet** durch
a) ein Auffangen der Kernschmelze in einer unterhalb des Reaktordruckbehälters (4) gelegenen Vorkammer (30) und ein Verweilen darin für eine vorgegebene Zeitspanne,
b) ein durch die Kernschmelze bewirktes Zerstören einer Trennwand (38), die zwischen der Vorkammer (30) und einer Ausbreitungskammer (34) gelegen ist,
c) ein Eindringen der Kernschmelze aus der Vorkammer (30) in die Ausbreitungskammer (34) und eine Verbreitung darin sowie
d) ein durch die Kernschmelze, die sich in der Ausbreitungskammer (34) befindet, bewirktes Zerstören eines Verschlußorgans (48), über das ein Kühlmittelreservoir (50) an die Ausbreitungskammer (34) angeschlossen ist, so daß das Kühlmittel in die Ausbreitungskammer (34) strömt und dort die Kernschmelze kühlt.

19. Verfahren nach Anspruch 18, **gekennzeichnet** durch eine Reaktion der Kernschmelze mit einem Material in der Vorkammer (30), wodurch sich der Schmelzpunkt erniedrigt und die Kernschmelze dünnflüssiger wird.

20. Verfahren nach Anspruch 8 oder 9, **dadurch gekennzeichnet,** daß die Kernschmelze über einen abschüssigen Kanal (36) von der Vorkammer (30) in die Ausbreitungskammer (34) eindringt.

## Claims

1. Device for collecting and cooling reactor-meltdown products from a reactor pressure vessel (4),
having an antechamber (30) which is arranged underneath the reactor pressure vessel (4),
having an expansion chamber (34) for the reactor-meltdown products,
having a channel (36) between the antechamber (30) and the expansion chamber (34), characterised in that the channel (36) is provided with a partition wall (38) which can be destroyed by the reactor-meltdown products and in that the reactor pressure vessel (4) is provided with a coolant reservoir (50) which is connected to the expansion chamber (34) by way of a sealing element (48) which can be destroyed by the reactor-meltdown products.

2. Device according to claim 1, characterised in that the antechamber (30) is lined on the base side and/or the wall side with refractory material (40).

3. Device according to claim 1 or 2, characterised in that the antechamber (30) is lined with a material which, in the event of a reaction with the reactor-meltdown products, results in a lowering of the melting point and makes the reactor-meltdown products less viscous as a result.

4. Device according to one of the claims 1 to 3, characterised in that the destructible partition wall (38) is dimensioned in such a way that it is destroyed after a given time span under the effect of the reactor-meltdown products, in which case this time span amounts, for example, to 20 to 30 minutes.

5. Device according to one of the claims 1 to 4, characterised in that the destructible partition wall (38) is inserted between the antechamber (30) and the channel (36).

6. Device according to one of the claims 1 to 5, characterised in that the channel (36) slopes downwards between the antechamber (30) and the expansion chamber (34).

7. Device according to one of the claims 1 to 6, characterised in that the coolant reservoir (50) is a water reservoir.

8. Device according to one of the claims 1 to 7, characterised in that the expansion chamber (34) is kept dry during normal operation.

9. Device according to one of the claims 1 to 8, characterised in that the sealing element (48) is arranged at the mouth of a feed line (56) from the coolant reservoir (50) to the expansion chamber (34).

10. Device according to one of the claims 1 to 9, characterised in that the partition wall (38) and/or the sealing element (48) can be destroyed by bursting or melting under the effect of the reactor-meltdown products.

11. Device according to one of the claims 1 to 10, characterised in that the partition wall (38) and/or the sealing element (48) comprises a plate or a plug made of glass or plastics material.

12. Device according to one of the claims 1 to 11, characterised in that arranged in the antechamber (30) there is a water-displacement body (20) which is formed in particular as a thin-walled hollow body.

13. Device according to one of the claims 1 to 12, characterised in that the antechamber (30) and/or a means of insulation (22) located therein is largely adapted to the way in which the reactor pressure vessel (4) is shaped so that the antechamber (30) has a comparatively small volume in comparison with the reactor pressure vessel (4).

14. Device according to one of the claims 1 to 13, characterised in that the expansion chamber (34) is arranged laterally relative to the reactor pressure vessel (4).

15. Device according to one of the claims 1 to 14, characterised in that arranged between the expansion chamber (34) and the antechamber (30) there is a sealing plate (46) which prevents water from the expansion chamber (34) from entering into the antechamber (30).

16. Device according to one of the claims 1 to 15, characterised in that the coolant reservoir (50) is arranged laterally relative to the reactor pressure vessel (4).

17. Device according to one of the claims 1 to 16, characterised in that the expansion chamber (34) has an area of 150 m² or more and/or in that the coolant reservoir (50) has a volume of 1500 m³ or more.

18. Method for collecting and cooling reactor-meltdown products from a reactor pressure vessel, characterised by
a) collection of the reactor-meltdown products in an antechamber (30), which is located underneath the reactor pressure vessel (4), and keeping them therein for a given time span,
b) destruction, effected by the reactor-meltdown products, of a partition wall (38) which is located between the antechamber (30) and an expansion chamber (34),
c) penetration of the reactor-meltdown products from the antechamber (30) into the expansion chamber (34) and spread thereof therein, and also
d) destruction, effected by the reactor-meltdown products located in the expansion chamber (34), of a sealing element (48) by way of which a coolant reservoir (50) is connected to the expansion chamber (34) so that the coolant flows into the expansion chamber (34) and there cools the reactor-meltdown products.

19. Method according to claim 18, characterised by a reaction of the reactor-meltdown products with a material in the antechamber (30), whereby the melting point is lowered and the reactor-meltdown products become less viscous.

20. Method according to claim 8 or 9, characterised in that the reactor-meltdown products penetrate into the expansion chamber (34) by way of a precipitous channel (36) from the antechamber (30).

## Revendications

1. Dispositif pour la récupération et le refroidissement de produits de fusion du coeur issus de la cuve d'un réacteur (4), comprenant une préchambre (30) située sous la cuve du réacteur (4), comprenant une chambre de propagation (34) pour les produits de fusion du coeur, comprenant un canal (36) entre la préchambre (30) et la chambre de propagation (34), caractérisé en ce que le canal (36) est pourvu d'une cloison (38) pouvant être détruite par les produits de fusion du coeur, et en ce que la cuve du réacteur (4) est pourvue d'un réservoir de produit refroidisseur (50) qui est relié à la chambre de propagation (34) par l'intermédiaire d'un organe de fermeture (48) pouvant être détruit par les produits de fusion du coeur.

2. Dispositif selon la revendication 1, caractérisé en ce que la préchambre (30) est revêtue, sur le fond et/ou les parois, d'un matériau réfractaire (40).

3. Dispositif selon la revendication 1 ou 2, caractérisé en ce que la préchambre (30) est revêtue d'un matériau qui, lorsqu'il réagit avec les produits de fusion du coeur, entraîne un abaissement du point de fusion et, par ce moyen, rend les produits de fusion du coeur plus fluides.

4. Dispositif selon l'une des revendications 1 à 3, caractérisé en ce que la cloison destructible (38) est dimensionnée de manière à être détruite, après un laps de temps prédéterminé, sous l'action des produits de fusion du coeur, ce laps de temps étant, par exemple, de 20 à 30 minutes.

5. Dispositif selon l'une des revendications 1 à 4, caractérisé en ce que la cloison destructible (38) est insérée entre la préchambre (30) et le canal (36).

6. Dispositif selon l'une des revendications 1 à 5, caractérisé en ce que le canal (36) est incliné entre la préchambre (30) et la chambre de propagation (34).

7. Dispositif selon l'une des revendications 1 à 6, caractérisé en ce que le réservoir de produit refroidisseur (50) est un réservoir d'eau.

8. Dispositif selon l'une des revendications 1 à 7, caractérisé en ce que la chambre de propagation (34) est maintenue au sec pendant la marche normale.

9. Dispositif selon l'une des revendications 1 à 8, caractérisé en ce que l'organe de fermeture (48) est situé à l'embouchure d'une conduite (56) allant du réservoir de produit refroidisseur (50) à la chambre de propagation (34).

10. Dispositif selon l'une des revendications 1 à 9, caractérisé en ce que la cloison (38) et/ou l'organe de fermeture (48) peut/peuvent être détruite/détruits par rupture ou fusion sous l'action des produits de fusion du coeur.

11. Dispositif selon l'une des revendications 1 à 10, caractérisé en ce que la cloison (38) et/ou l'organe de fermeture (48) comprend/comprennent une plaque ou un bouchon en verre ou en matière plastique.

12. Dispositif selon l'une des revendications 1 à 11, caractérisé en ce qu'un corps de refoulement de l'eau (20) est situé dans la préchambre (30), lequel corps est exécuté, notamment, en tant que corps creux à paroi mince.

13. Dispositif selon l'une des revendications 1 à 12, caractérisé en ce que la préchambre (30) et/ou une isolation (22) située dans celle-ci est/sont adaptée/s, dans une large mesure, à la forme de la cuve du réacteur (4), de manière à ce que la préchambre (30) ait un volume relativement petit par rapport à la cuve du réacteur (4).

14. Dispositif selon l'une des revendications 1 à 13, caractérisé en ce que la chambre de propagation (34) est située latéralement par rapport à la cuve du réacteur (4).

15. Dispositif selon l'une des revendications 1 à 14, caractérisé en ce qu'une plaque d'étanchéité (46) est située entre la chambre de propagation (34) et la préchambre (30), laquelle plaque d'étanchéité empêche que de l'eau n'entre de la chambre de propagation (34) dans la préchambre (30).

16. Dispositif selon l'une des revendications 1 à 15, caractérisé en ce que le réservoir de produit refroidisseur (50) est situé latéralement par rapport à la cuve du réacteur (4).

17. Dispositif selon l'une des revendications 1 à 16, caractérisé en ce que la chambre de propagation (34) a une surface de 150 m² ou plus et/ou en ce que le réservoir de produit refroidisseur (50) a un volume de 1500 m³ ou plus.

18. Procédé de récupération et de refroidissement de produits de fusion du coeur issus de la cuve d'un réacteur, caractérisé par
a) une récupération des produits de fusion du coeur dans une préchambre (30) située sous la cuve du réacteur (4) et un séjour dans cette préchambre pendant un laps de temps prédéterminé,
b) une destruction, provoquée par les produits de fusion du coeur, d'une cloison (38) qui est située entre la préchambre (30) et une chambre de propagation (34),
c) une pénétration des produits de fusion du coeur de la préchambre (30) dans la chambre de propagation (34) et une propagation dans cette dernière, et
d) une destruction, provoquée par les produits de fusion du coeur se trouvant dans la chambre de propagation (34), d'un organe de fermeture (48) par l'intermédiaire duquel un réservoir de produit refroidisseur (50) est relié à la chambre de propagation (34), de manière à ce que le produit refroidisseur s'écoule dans la chambre de propagation (34) et refroidisse les produits de fusion du coeur dans cette chambre.

19. Procédé selon la revendication 18, caractérisé par une réaction des produits de fusion du coeur avec un matériau dans la préchambre (30), réaction grâce à laquelle le point de fusion s'abaisse et les produits de fusion du coeur deviennent plus fluides.

20. Procédé selon la revendication 8 ou 9, caractérisé en ce que les produits de fusion du coeur entrent de la préchambre (30) dans la chambre de propagation (34) par un canal incliné (36).
